# EUROPÄISCHE PATENTSCHRIFT

(11) **EP 1 134 545 B1**
(45) Veröffentlichungstag und Bekanntmachung des Hinweises auf die Patenterteilung: **17.09.2003**
(21) Anmeldenummer: 01105637.1
(22) Anmeldetag: 07.03.2001
(51) Int. Cl.: G01C 3/08

(54) **Distanzsensor**
Distance sensor
Capteur de distance

(30) Priorität: 15.03.2000 DE 10012522
(43) Veröffentlichungstag der Anmeldung: 19.09.2001
(73) Patentinhaber: Leuze electronic GmbH + Co., D-73277 Owen (DE)
(72) Erfinder: Allgaier, Roland, 73268 Erkenbrechtsweiler (DE); Böhmer, Klaus, 73278 Schlierbach (DE)
(74) Vertreter: Ruckh, Rainer Gerhard, Dr.

(56) Entgegenhaltungen:
- EP-A- 0 851 211
- US-A- 4 825 091
- PATENT ABSTRACTS OF JAPAN vol. 015, no. 265 (E-1086), 5. Juli 1991 (1991-07-05) & JP 03 088481 A (SUMITOMO METAL MINING CO LTD), 12. April 1991 (1991-04-12)

## Beschreibung

Die Erfindung betrifft einen Distanzsensor gemäß dem Oberbegriff des Anspruchs 1.

Derartige Distanzsensoren arbeiten nach dem Triangulationsprinzip. Der Distanzsensor weist einen Sendelichtstrahlen emittierenden Sender sowie einen Empfangslichtstrahlen empfangenden Empfänger auf, der in Abstand neben dem Sender angeordnet ist. Der Empfänger ist von vorzugsweise einer CCD Zeile gebildet, welche mehrere nebeneinander liegende photoempfindliche Elemente, vorzugsweise Photodioden aufweist. Dem Sender ist eine Sendeoptik zur Strahlformung der Sendelichtstrahlen nachgeordnet. Dem Empfänger ist eine Empfangsoptik vorgeordnet, welche die Empfangslichtstrahlen auf den Empfänger fokussiert. Entsprechend der Distanz des Objekts zum Distanzsensor verläuft die optische Achse der vom Objekt zurückreflektierten Empfangslichtstrahlen in einem bestimmten Triangulationswinkel zur optischen Achse der Sendelichtstrahlen. Dementsprechend variiert der Auftreffpunkt der Empfangslichtstrahlen auf dem Empfänger in Abhängigkeit der Objektdistanz, so dass der Auftreffpunkt der Empfangslichtstrahlen auf der CCD Zeile ein Maß für die Objektdistanz liefert.

Üblicherweise erfolgt die Auswertung der an den Ausgängen der photoempfindlichen Elemente des Empfängers anstehenden Empfangssignale derart, dass als Auftreffpunkt das photoempfindliche Element gewählt wird, welches das größte Ausgangssignal liefert. Aus diesem Auftreffpunkt wird dann die Distanz des Objekts in einer Auswerteeinheit berechnet. Alternativ kann zur Ermittlung der Distanz der Flächenschwerpunkt des Lichtflecks der Empfangslichtstrahlen auf der CCD Zeile ermittelt werden.

Ein Distanzsensor gemäß dem Oberbegriff des Anspruchs 1 ist aus der US 4, 825,092 bekannt. Dieser weist zur Durchführung der Distanzmessung einen von einer Laserdiode gebildeten ersten Sender auf, der erste Sendelichtstrahlen im Infrarotbereich emittiert. Als Empfänger ist eine CCD-Zeile vorgesehen. Um die Ausrichtung des Distanzsensors auf Testobjekte während eines Einlernvorganges zu erleichtern, ist ein wenigstens zweiter Sender vorgesehen, der zweite Sendelichtstrahlen im sichtbaren Bereich emittiert, wobei diese koaxial zu dem ersten Sendelichtstahlen verlaufen.

Aus der EP 0 851 211 A1 ist ein weiterer nach dem Triangulationsprinzip arbeitender Distanzsensor bekannt. Dieser weist neben einer Lichtquelle einen als PSD Element ausgebildeten Empfänger auf. Zur Distanzberechnung werden die beiden Ausgangssignale des Empfängers verwendet.

Die JP-A-03 088481 betrifft einen nach dem Triangulationsprinzip arbeitenden Distanzsensor mit einem Sender, der von einer im Infrarotbereich emittierenden Leuchtdiode gebildet, und mit einem Empfänger, der von einem CCD-Senosr gebildet ist. Zur Unterdrückung von Fremdlichteinflüssen ist ein dem Sender und dem Empfänger vorgeordnetes optisches Filter vorgesehen.

Nachteilig bei derartigen Distanzsensoren ist, dass die Distanzmessung von der Oberflächenbeschaffenheit der Objekte abhängt, wodurch insbesondere auch erhebliche Fehler bei der Distanzmessung auftreten können.

Treffen beispielsweise die Sendelichtstrahlen auf einen Hell-Dunkel-Übergang auf der Objektoberfläche, so wird von dem auf den hellen Bereich der Objektoberfläche auftreffenden Teil der Sendelichtstrahlen ein großer Teil zum Empfänger zurückreflektiert. Dagegen wird von den auf den dunklen Bereich der Objektoberfläche auftreffenden Teil der Sendelichtstrahlen nur ein geringer Teil zum Empfänger zurückreflektiert.

Damit ergibt sich im Vergleich zur Vermessung eines Objekts mit homogener heller oder dunkler Objektoberfläche eine Verschiebung der Verteilung der Empfangslichtstrahlen auf dem Empfänger, wodurch der daraus ermittelte Distanzwert verfälscht wird.

Ein weiteres Problem entsteht dann, wenn mit dem Distanzsensor Objekte vermessen werden, welche keine ebene sondern eine strukturierte Objektoberfläche aufweisen. Derartige Objekte können beispielsweise von Wellpappen gebildet sein, die eine periodische wellige Struktur aufweisen und in Mehrfachschichten übereinander liegen.

Treffen die Sendelichtstrahlen seitlich auf eine derartige Schichtstruktur, so werden diese nur dann zum Empfänger zurückreflektiert, wenn diese auf die Wellpappen treffen. Treffen die Sendelichtstrahlen jedoch auf die Zwischenräume zwischen den Wellpappen, so werden diese nicht mehr zum Empfänger zurückreflektiert, so dass dann eine Distanzbestimmung nicht mehr möglich ist.

Der Erfindung liegt die Aufgabe zugrunde, einen Distanzsensor der eingangs genannten Art so auszubilden, dass eine korrekte Bestimmung der Distanzen von Objekten unabhängig von der Oberflächenbeschaffenheit möglich ist.

Zur Lösung dieser Aufgabe sind die Merkmale des Anspruchs 1 vorgesehen. Vorteilhafte Ausführungsformen und zweckmäßige Weiterbildungen der Erfindungen sind in den abhängigen Ansprüchen beschrieben.

Der erfindungsgemäße Distanzsensor weist zwei Sender auf, wobei die von den Sendern emittierten Sendelichtstrahlen koaxial verlaufen. Dabei weisen die von den Sendern emittierten Sendelichtstrahlen unterschiedliche Strahldurchmesser auf.

Von den beiden Sendern werden Sendelichtstrahlen in Form von Sendelichtimpulsen emittiert. Dabei emittieren die beiden Sender alternierend Sendelichtimpulse.

In Abhängigkeit der auf dem Empfänger auftreffenden Empfangslichtmenge während des Sendebetriebs des ersten und/oder zweiten Senders werden zur Distanzmessung die während des Sendebetriebs des ersten und/oder zweiten Senders registrierten Empfangssignale am Ausgang des Empfängers herangezogen.

Durch diese Art der Auswertung wird eine genaue Beurteilung der Struktur der Objektoberfläche ermöglicht, wobei in Abhängigkeit der jeweiligen Oberflächenstruktur nur die Empfangssignale zur Distanzmesswertbestimmung herangezogen werden, die bei aktiven ersten und/oder zweiten Sender erhalten werden. Auf diese Weise kann die Genauigkeit der Distanzmessung erheblich gesteigert werden.

Die von dem ersten Sender emittierten Sendelichtstrahlen weisen den größeren Strahldurchmesser auf. Dabei ist der Strahldurchmesser vorzugsweise so gewählt, dass dieser größer als die Strukturbreiten der zu vermessenden Objekte ist. Ist das Objekt beispielsweise von Wellpappen gebildet, die in Mehrfachschichten übereinander liegen, wobei der Distanzsensor auf eine Seitenfläche dieser Schichtstruktur ausgerichtet ist, so ist der Strahldurchmesser der Sendelichtstrahlen so groß gewählt, dass sich der Lichtfleck der Sendelichtstrahlen über wenigstens eine Wellenpappenschicht erstreckt. Auf diese Weise ist gewährleistet, dass die Sendelichtstrahlen nicht vollständig auf einen Hohlraum in dieser Schichtstruktur treffen, sondern zumindest teilweise auf die Wellpappe treffen, so dass die Sendelichtstrahlen zu einem erheblichen Teil auf den Empfänger zurückreflektiert werden, wodurch eine genaue Distanzmessung gewährleistet ist.

Demgegenüber weisen die vom zweiten Sender emittierten Sendelichtstrahlen einen erheblich kleineren Strahldurchmesser auf, wobei dieser vorzugsweise in der Größenordnung der Strukturbreiten der Objekte liegt.

Treffen die zweiten Sendelichtstrahlen auf einen Hell-Dunkel-Übergang auf der Oberfläche des Objekts, so wird dadurch zwar gegenüber der Vermessung einer homogenen hellen oder dunklen Objektoberfläche eine Verschiebung des Lichtflecks auf dem Empfänger erhalten.

Da der Strahldurchmesser der zweiten Sendelichtstrahlen jedoch sehr klein ist, ist auch der Lichtfleck auf dem Empfänger sehr klein, so dass durch die Verschiebung des Lichtflecks aufgrund des Hell-Dunkel-Übergangs nur ein kleiner Distanzmessfehler erhalten wird.

In einer ersten Ausführungsform der Erfindung werden die von den beiden Sendern emittierten Sendelichtstrahlen als Dauerlicht emittiert. Dadurch wird bei der Distanzmessung über die mit dem ersten und zweiten Sender erhaltenen Empfangssignale am Empfänger gemittelt.

Durch diese Mittelung werden die für die einzelnen Sendelichtstrahlen erhaltenen Distanzmessfehler gegenüber einem nur mit einem dieser Sender ableitenden Distanzsensor halbiert, so dass dadurch eine erhebliche Verbesserung der Genauigkeit der Distanzmessung erzielt wird.

Die Erfindung wird im nachstehenden anhand der Zeichnungen erläutert. Es zeigen:
- Figur 1:: Schematische Darstellung eines Ausführungsbeispiels des erfindungsgemäßen Distanzsensors mit einem ersten und zweiten Sender.
- Figur 2:: Schematische Darstellung der Oberfläche eines von einer Wellpappe gebildeten Objekts,
a: im Verhältnis zum Strahldurchmesser der vom ersten Sender emittierten ersten Sendelichtstrahlen,
b: im Verhältnis zum Strahldurchmesser der vom zweiten Sender emittierten zweiten Sendelichtstrahlen.
- Figur 3:: Schematische Darstellung des bei einer Vermessung eines Objektes mit einem Hell-Dunkel-Übergang entstehenden Messfehlers,
a: für den mit dem ersten Sender erhaltenen Distanzwert,
b: für den mit dem zweiten Sender erhaltenen Distanzwert.
- Figur 4 a-d:: Verschiedene Formen des Sendebetriebs der Sender des Distanzsensors.

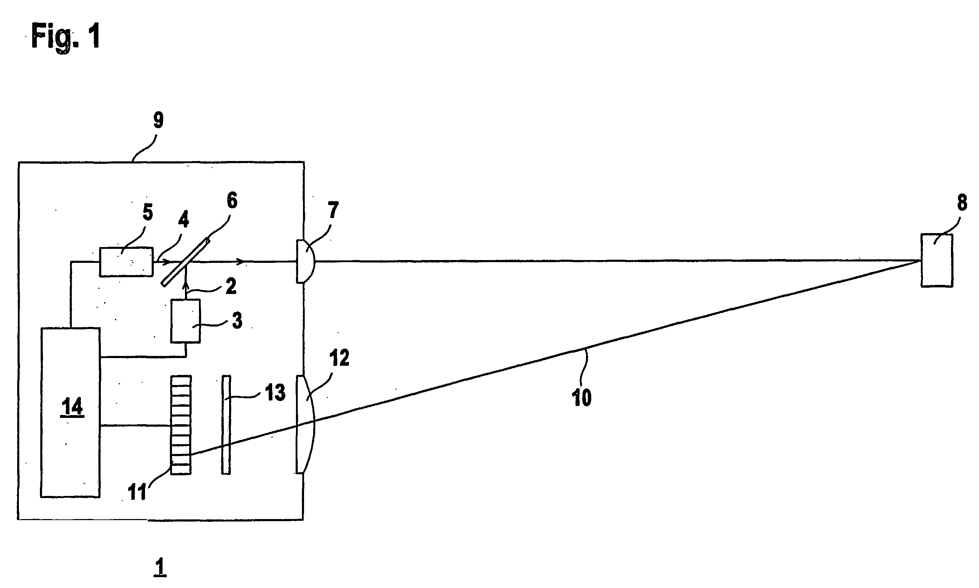

Figur 1 zeigt den Aufbau eines Ausführungsbeispiels des erfindungsgemäßen Distanzsensors 1. Die Distanzmessung erfolgt dabei nach dem Triangulationsprinzip. Der Distanzsensor 1 weist hierzu einen erste Sendelichtstrahlen 2 emittierenden ersten Sender 3 und einen zweite Sendelichtstrahlen 4 emittierenden zweiten Sender 5 auf.
Die Sender 3, 5 sind mit senkrecht zueinander angeordneten optischen Achsen hinter einem Strahlteilerspiegel 6 angeordnet. Über den Strahlteilerspiegel 6 werden die ersten und zweiten Sendelichtstrahlen 2, 4 koaxial verlaufend über eine Sendeoptik 7 in einen Überwachungsbereich zur Detektion von Objekten 8 geführt. Die Sendeoptik 7 ist von einer Linse gebildet, die in der Frontwand eines Gehäuses 9 befestigt ist, in welchem der Distanzsensor 1 integriert ist.

Erfindungsgemäß ist der Strahldurchmesser der ersten Sendelichtstrahlen 2 größer als der Strahldurchmesser der zweiten Sendelichtstrahlen 4. Hierzu ist vorzugsweise der erste Sender 3 von einer Leuchtdiode und der zweite Sender 5 von einer Laserdiode gebildet. Alternativ können auch beide Sender 3, 5 von Leuchtdioden gebildet sein, wobei dann vorzugsweise unterschiedliche optische Mittel zur Strahlformung der ersten und zweiten Sendelichtstrahlen 2, 4 vorgesehen sind.

Die von an einem Objekt 8 reflektierten Empfangslichtstrahlen 10 verlaufen in einem bestimmten von der Objektdistanz abhängigen Triangulationswinkel zur optischen Achse der Sendelichtstrahlen 2, 4 auf einen als ortsauflösenden Detektor ausgebildeten Empfänger 11 zu.

Der Empfänger 11 ist in Abstand neben den Sendern 3, 5 im Gehäuse 9 des Distanzsensors 1 angeordnet. Die Empfangslichtstrahlen 10 werden über eine Empfangsoptik 12 und ein optisches Filter 13 zum Empfänger 11 geführt. Die Empfangsoptik 12 ist an der Gehäusewand neben der Sendeoptik 7 angeordnet.

Die Durchlasscharakteristik des optischen Filters 13 ist an die Wellenlängen der von den Sendern 3, 5 emittierten Sendelichtstrahlen 2, 4 angepasst. Vorzugsweise emittieren die Sender 3, 5 Sendelichtstrahlen 2, 4 gleicher Wellenlänge, vorzugsweise im sichtbaren roten Wellenlängenbereich.

Entsprechend der Distanz des Objekts 8 verlaufen die Empfangslichtstrahlen 10 in einem bestimmten Triangulationswinkel zur optischen Achse der Sendelichtstrahlen 2, 4. Dementsprechend variiert auch der Auftreffpunkt der Empfangslichtstrahlen 10 auf dem ortsauflösenden Detektor.

In einer Auswerteeinheit 14, an welche die Sender 3, 5 und der ortsauflösende Detektor angeschlossen sind, wird aus der Lage des Lichtflecks der Empfangslichtstrahlen 10 auf dem ortsauflösenden Detektor die Distanz des Objekts 8 zum Distanzsensor 1 bestimmt. Die Auswerteeinheit 14 ist von einem Microcontroller oder dergleichen gebildet.

Der ortsauflösende Detektor ist vorzugsweise von einer CCD Zeile gebildet, welche eine Linearanordnung von mehreren photoempfindlichen CCD Elementen aufweist. Alternativ kann der ortsauflösende Detektor von einer CMOS-Zeile oder dergleichen gebildet sein.

Zur Distanzbestimmung wird in der Auswerteeinheit 14 vorzugsweise der Flächenschwerpunkt des Lichtflecks der Empfangslichtstrahlen 10 auf der CCD Zeile als Maß für den Auftreffpunkt der Empfangslichtstrahlen 10 herangezogen. Prinzipiell kann auch die Lage des Intensitätsmaximums auf der CCD Zeile ausgewertet werden.

Erfindungsgemäß sind die Strahldurchmesser der ersten und zweiten Sendelichtstrahlen 2,4 derart an die Strukturen der Oberflächen der zu vermessenden Objekte 8 so angepasst, dass die Distanzmessung nicht oder geringfügig durch die Oberflächenstrukturen der Objekte 8 beeinflusst wird, so dass der diesbezügliche Distanzmessfehler entsprechend gering ist.

Dabei ist der Strahldurchmesser der ersten Sendelichtstrahlen 2 größer als die Strukturbreiten der Strukturen an den Oberflächen der zu vermessenden Objekte 8. Demgegenüber ist der Strahldurchmesser der zweiten Sendelichtstrahlen 4 in der Größenordnung der Strukturbreiten der zu vermessenden Objekte 8.

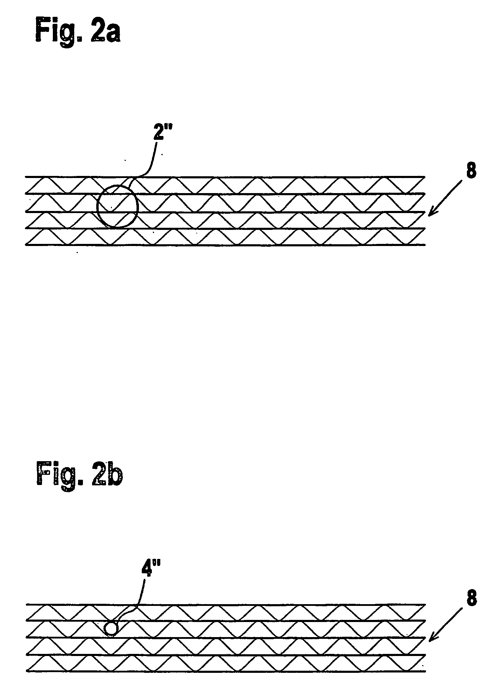

Die Figuren 2 a und 2 b zeigen die Größenordnungen der Strahldurchmesser im Vergleich zu einem Objekt 8, welches aus einer Mehrfachschichtung von Wellpappen gebildet ist.

In den Figuren 2 a und 2 b ist dabei die Draufsicht auf eine Seitenfläche einer derartigen Mehrfachschichtung von Wellpappen dargestellt. Die Wellpappe in einer Schicht weist eine periodische, wellige Struktur auf. Die einzelnen Wellpappen sind durch Schichten von ebenen Pappen getrennt, wobei die Wellpappe mit ihren Wellenkämmen und Wellentälern jeweils an der Unter- und Oberseite der ebenen Pappe aufliegt. Bei dieser Schichtstruktur sind zwischen den ebenen Pappen und der Wellpappe Zwischenräume vorhanden, die an der in den Figuren 2 a und 2 b dargestellten Seitenfläche ausmünden und senkrecht zu der Zeichenebene verlaufen.

In Figur 2 a ist der Strahldurchmesser 2" des Lichtflecks der ersten Sendelichtstrahlen 2 auf der Seitenfläche der Mehrfachschichtung dargestellt. In Figur 2 b ist der Strahldurchmesser 4" des Lichtflecks der zweiten Sendelichtstrahlen 4 auf der Seitenfläche der Mehrfachschichtung dargestellt.

Der Strahldurchmesser 4" der zweiten Sendelichtstrahlen 4 ist kleiner als die Zwischenräume zwischen einer Wellpappe und einer angrenzenden ebenen Pappe. Daher werden die zweiten Sendelichtstrahlen 4 nur dann von der Mehrfachschichtung zum Empfänger 11 zurückreflektiert, wenn diese auf den Rand der Wellpappe oder einer ebenen Pappe auftreffen. Treffen die zweiten Sendelichtstrahlen 4 dagegen auf einen der Zwischenräume, so gelangen diese nicht mehr zurück zum Empfänger 11, so dass eine Distanzmessung nicht mehr möglich ist.

Demgegenüber ist der Strahldurchmesser 2" der ersten Sendelichtstrahlen 2 größer als die Zwischenräume und insbesondere auch größer als die Höhe einer Schicht der Mehrfachschichtung. Damit ist gewährleistet, dass in jedem Fall ein Teil der ersten Sendelichtstrahlen 2 auf den Rand der Wellpappe oder den Rand der angrenzenden ebenen Pappe trifft und zurück zum Empfänger 11 reflektiert wird. Damit ist mit den ersten Sendelichtstrahlen 2 unabhängig von deren Auftreffpunkt auf der Mehrfachschichtung eine hinreichend genaue Distanzmessung gewährleistet.

Demzufolge eignen sich zur Distanzbestimmung von derartigen Objekten 8 die ersten Sendelichtstrahlen 2 besser als die zweiten Sendelichtstrahlen 4.

Dagegen werden mit den zweiten Sendelichtstrahlen 4 besonders auch dann exakte Distanzmesswert erhalten, wenn auf der Oberfläche eines Objekts 8 Hell-Dunkel-Übergänge vorhanden sind.

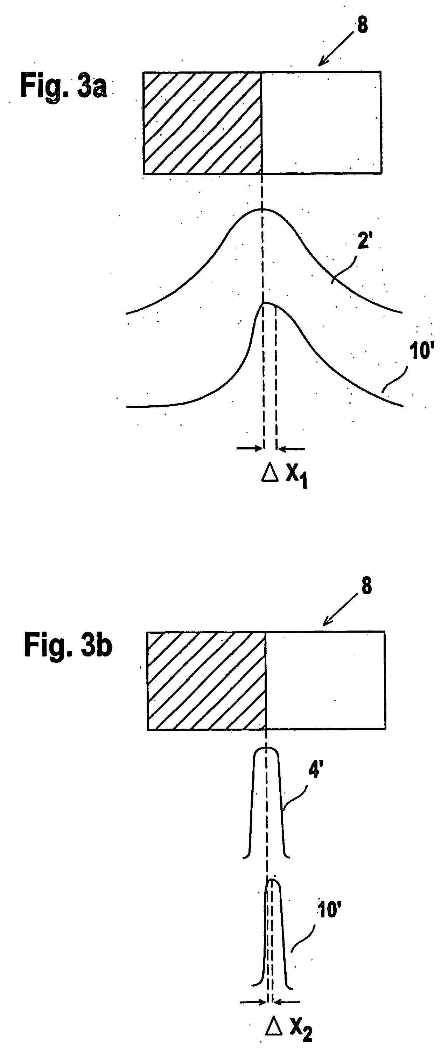

Dies ist in den Figuren 3 a und 3 b veranschaulicht. Dort ist schematisch die Oberfläche eines Objektes 8 dargestellt, welches beispielsweise von einem bedruckten Papierbogen gebildet ist. Aufgrund dieser Bedruckung weist dieses Objekt 8 einen Hell-Dunkel-Übergang zwischen einer dunklen und einer hellen Fläche auf.

Aufgrund der Größe des Strahldurchmessers der ersten Sendelichtstrahlen 2 sind diese wie aus Figur 3 a ersichtlich nicht auf den Bereich des Hell-Dunkel-Übergangs konzentriert. Vielmehr erstreckt sich die Verteilung 2' der ersten Sendelichtstrahlen 2 auch auf weite Bereiche der hellen und dunklen Flächen des Objekts 8.

In Figur 3 a ist neben der Verteilung 2' der Strahlungsintensität der auf die Objektoberfläche auftreffenden ersten Sendelichtstrahlen 2 auch die Verteilung 10' der Strahlungsintensität der von der Objektoberfläche zurückreflektierten, auf den Empfänger 11 auftreffenden Empfangslichtstrahlen 10 dargestellt.

Dabei trifft das Zentrum der Sendelichtstrahlen 2 exakt auf den Hell-Dunkel-Übergang zwischen der hellen und dunklen Fläche. Entsprechend der Sendecharakteristik des ersten Senders 3 und der Ausbildung der Sendeoptik 7 weist die Verteilung 2' der ersten Sendelichtstrahlen 2 einem symmetrisch zum Hell-Dunkel-Übergang gaußförmigen Verlauf auf.

Der auf die helle Fläche auftreffende Teil der Sendelichtstrahlen 2, 4 wird erheblich stärker zum Empfänger 11 zurückreflektiert als der auf die dunkle Fläche auftreffende Teil der Sendelichtstrahlen 2, 4. Dementsprechend wird für die Verteilung 10' der zurückreflektierten Empfangslichtstrahlen 10 nicht mehr ein symmetrischer gaußförmiger Verlauf erhalten sondern die in Figur 3 a dargestellte asymmetrische Verteilung 10'.

Demzufolge verschiebt sich der Flächenschwerpunkt der Verteilung 10' der Empfangslichtstrahlen 10 auf dem Empfänger 11 um einen Wert Δ X₁ gegenüber einer Verteilung 10' die bei der Vermessung eines homogenen hellen oder dunklen Objektes 8 erhalten worden wäre.

Die aufgrund dieses vorgenannten Fehlers erhaltene Verschiebung Δ X₁ des Flächenschwerpunkts auf dem Empfänger 11 führt zu einem entsprechenden Distanzmessfehler.

Figur 3 b zeigt die Verhältnisse bei der Vermessung desselben Hell-Dunkel-Übergangs mit den zweiten Sendelichtstrahlen 4 des zweiten Senders 5. Auch in diesem Fall ist die Verteilung 4' der auftreffenden Sendelichtstrahlen 4 im wesentlichen gaußförmig und symmetrisch zum Hell-Dunkel-Übergang. Die Verteilung 10' der Empfangslichtstrahlen 10 ist durch den Kontrast der hellen und dunklen Fläche in gleicher Weise wie bei dem in Figur 3 dargestellten Fall asymmetrisch ausgebildet, so dass sich eine Verschiebung des Flächenschwerpunkts der Empfangslichtverteilung um den Betrag Δ X₂ ergibt. Da jedoch der Strahldurchmesser der zweiten Sendelichtstrahlen 4 erheblich kleiner als jener der ersten Sendelichtstrahlen 2 ist, ist die Verteilung 4' der zweiten Sendelichtstrahlen 4 im Bereich des Hell-Dunkel-Übergangs konzentriert. Somit ergibt sich ein im Vergleich zu Δ X₁ erheblich kleinerer Messfehler A X₂.

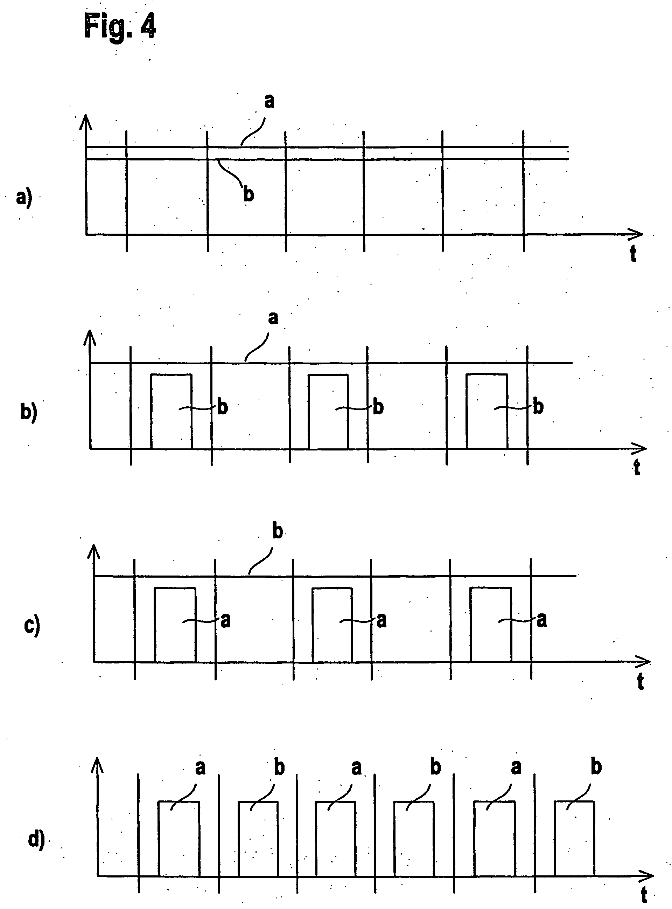

In den Figuren 4 a - 4 d sind verschiedene Formen des Sendebetriebs der beiden Sender 3, 5 dargestellt. Die Sender 3, 5 werden von der Auswerteeinheit 14 angesteuert, welche den Sendebetrieb in geeigneter Weise vorgibt. Die Pegel der ersten Sendelichtstrahlen 2 sind in den Zeitdiagrammen gemäß den Figuren 4 a - 4 d mit a gekennzeichnet, während die Pegel der zweiten Sendelichtstrahlen 4 mit b gekennzeichnet sind.

Bei dem in Figur 4 a dargestellten Ausführungsbeispiel senden beide Sender 3, 5 Sendelichtstrahlen 2, 4 in Form von Dauerlicht aus. Die Amplituden der ersten und zweiten Sendelichtstrahlen 4 sind dabei etwa gleich groß.

Bei dieser Art des Sendebetriebs treffen die von den ersten und zweiten Sendem 3, 5 emittierten Sendelichtstrahlen 2, 4 gleichzeitig auf den Empfänger 11. Somit ergibt sich bei der Distanzmessung eine Mittelung der für die ersten und zweiten Sendelichtstrahlen 2, 4 erhaltenen Distanzwerte und damit verbundenen Distanzmessfehler. Vorteilhaft hierbei ist, dass die Distanzmessfehler, die hierbei erhalten werden im Vergleich zu einem Distanzsensor 1, der nur erste oder zweite Sendelichtstrahlen 2, 4 emittiert, etwa halbiert werden. Dies gilt insbesondere für das in den Figuren 3 a und 3 b dargestellte Anwendungsbeispiel.

Für das in den Figuren 2 a und 2 b dargestellte Ausführungsbeispiel werden in jedem Fall hinreichend genaue Messwerte erhalten, da mit den ersten Sendelichtstrahlen 2 eine genaue Distanzbestimmung möglich ist.

Bei dem in Figur 4 b dargestellten Ausführungsfall wird der erste Sender 3 im Dauerlichtbetrieb betrieben, während der zweite Sender 5 periodisch Folgen von Sendelichtimpulsen emittiert.

Umgekehrt wird bei dem in Figur c dargestellten Ausführungsbeispiel der zweite Sender 5 im Dauerlichtbetrieb betrieben, während der erste Sender 3 periodisch Folgen von Sendelichtimpulsen emittiert.

Zweckmäßigerweise können mit den im Pulsbetrieb betriebenen Sendern 3, 5 Kontrollmessungen durchgeführt werden, mit welchen Informationen über die Oberflächenbeschaffenheit von Objekten 8 oder deren Veränderungen erhalten werden. In Abhängigkeit davon können Warnmeldungen ausgegeben werden, wenn eine hinreichend genaue Distanzmessung in dieser Betriebsart nicht mehr möglich ist. Alternativ kann in Abhängigkeit der Kontrollmessungen der im Dauerbetrieb betriebene Sender 3, 5 für eine vorgegebene Zeit abgeschaltet werden, um die Messgenauigkeit zu erhöhen.

Weiterhin können in der Auswerteinheit in Abhängigkeit der auf den Empfänger 11 während des Sendebetriebs und/oder der Sendepausen des im Pulsbetrieb betriebenen Senders 3, 5 auftreffenden Empfangslichtmenge zur Distanzmessung die Empfangssignale herangezogen werden, die während der Sendepausen und/oder während des Sendebetriebs des im Pulsbetrieb betriebenen Senders 3, erhalten werden.

Bei der in Figur 4 d dargestellten Betriebsart emittieren die beiden Sender 3, 5 eine alternierende periodische Folge von Sendelichtimpulsen. Damit werden . die unterschiedlich strukturierten Objektoberflächen abwechselnd mit beiden Sendern 3, 5 vermessen, wodurch detaillierte Aussagen über die Oberflächenbeschaffenheiten möglich sind. Weichen beispielsweise die Lagen der Flächenschwerpunkte der Empfangslichtstrahlen 10 für die Messungen mit den unterschiedlichen Sendern 3, 5 stark voneinander ab, so liegt mit großer Wahrscheinlichkeit die Ursache hierfür darin, dass die ersten und zweiten Sendelichtstrahlen 2, 4 auf einen Hell-Dunkel-Übergang der Objektoberfläche treffen. Zweckmäßigerweise werden in derartigen Fällen nur die bei aktiviertem zweitem Sender 5 erhaltenen Messwerte zur Distanzbestimmung herangezogen.

Wird andererseits nur bei aktivem ersten Sender nicht jedoch bei aktivem zweiten Sender 5 eine hinreichend große Empfangslichtmenge zur Durchführung der Distanzmessung erhalten, wie dies bei dem Anwendungsbeispiel gemäß Figur 2 der Fall sein kann, so werden zweckmäßigerweise nur die bei aktiviertem ersten Sender 3 erhaltenen Messwerte zur Distanzbestimmung herangezogen.

Allgemein werden in Abhängigkeit der auf den Empfänger 11 während des Sendebetriebs des ersten und/oder zweiten Senders 3, 5 auf den Empfänger 11 auftreffenden Empfangslichtmenge zur Distanzmessung die während des Sendebetriebs des ersten und/oder zweiten Senders 3, 5 registrierten Empfangssignale am Ausgang des Empfängers 11 herangezogen.

Dabei wird zweckmäßigerweise die auf den Empfänger 11 auftreffende Empfangslichtmenge, in Abhängigkeit derer die bei Aktivierung eines Senders 3, 5 oder beider Sender 3, 5 erhaltenen Empfangssignale zur Distanzbestimmung herangezogen werden, über einen vorgegebene Zeitraum erfasst und gegebenenfalls gemittelt.

### Bezugszeichenliste

- (1): Distanzsensor
- (2): erste Sendelichtstrahlen
- (2'): Verteilung
- (2"): Strahldurchmesser
- (3): erste Sender
- (4): zweite Sendelichtstrahlen
- (4'): Verteilung
- (4"): Strahldurchmesser
- (5): zweite Sender
- (6): Strahlteilerspiegel
- (7): Sendeoptik
- (8): Objekt
- (9): Gehäuse
- (10): Empfangslichtstrahlen
- (10'): Verteilung
- (11): Empfänger
- (12): Empfangsoptik
- (13): Filter
- (14): Auswerteeinheit

## Patentansprüche

1. Distanzsensor mit einem erste Sendelichtstrahlen emittierenden ersten Sender und einem zweite Sendelichtstrahlen emittierenden zweiten Sender, wobei die ersten und zweiten Sendelichtstrahlen koaxial verlaufen und unterschiedliche Strahldurchmesser aufweisen, mit in einem in Abstand zu diesen angeordneten, als ortsauflösender Detektor ausgebildeten Empfänger, auf welchem die von einem Objekt reflektierten, in einem Triangulationswinkel zu den Sendelichtstrahlen verlaufenden Empfangslichtstrahlen geführt sind, und mit einer Auswerteeinheit, in welcher aus der Lage des Lichtflecks der Empfangslichtstrahlen auf dem ortsauflösenden Detektor die Distanz des Objektes ermittelt wird, **dadurch gekennzeichnet, dass** der erste und zweite Sender (3, 5) alternierend periodische Folgen von ersten und zweiten Sendelichtimpulsen aussenden, und dass in Abhängigkeit der auf den Empfänger (11) während des Sendebetriebs des ersten und/oder zweiten Senders (3, 5) auf den Emfpänger (11) auftreffenden Empfangslichtmenge zur Distanzbestimmung die während des Sendebetriebs des ersten und/oder zweiten Senders (3, 5) registrierten Empfangssignale am Ausgang des Empfängers (1) herangezogen werden.

2. Distanzsensor nach Anspruch 1, **dadurch gekennzeichnet, dass** der ortsauflösende Detektor von einer CCD Zeile gebildet ist.

3. Distanzsensor nach Anspruch 2, **dadurch gekennzeichnet, dass** zur Ermittlung der Distanz eines Objekts (8) der Flächenschwerpunkt des Lichtflecks der Empfangslichtstrahlen (10) auf der CCD Zeile ermittelt wird.

4. Distanzsensor nach einem der Ansprüche 1 - 3, **dadurch gekennzeichnet, dass** die von den Sendern (3, 5) emittierten Sendelichtstrahlen (2, 4) über einen Strahlteilerspiegel (6) auf eine gemeinsame Sendeoptik (7) geführt sind.

5. Distanzsensor nach einem der Ansprüche 1 - 4, **dadurch gekennzeichnet, dass** der erste Sender (3) von einer Leuchtdiode gebildet ist.

6. Distanzsensor nach Anspruch 5, **dadurch gekennzeichnet, dass** der zweite Sender (5) von einer Laserdiode gebildet ist.

7. Distanzsensor nach einem der Ansprüche 5 oder 6, **dadurch gekennzeichnet, dass** der Strahldurchmesser der ersten Sendelichtstrahlen (2) größer als die Strukturbreiten von Strukturen auf der Oberfläche des Objektes (8) ist.

8. Distanzsensor nach einem der Ansprüche 5 - 7, **dadurch gekennzeichnet, dass** der Strahldurchmesser der zweiten Sendelichtstrahlen (4) in der Größenordnung der Strukturbreiten von Strukturen auf der Oberfläche des Objektes (8) liegt.

9. Distanzsensor nach einem der Ansprüche 1 - 8, **dadurch gekennzeichnet, dass** die Sender (3, 5) Sendelichtstrahlen (2, 4) gleicher Wellenlänge emittieren.

10. Distanzsensor nach Anspruch 9, **dadurch gekennzeichnet, dass** die Sender (3, 5) Sendelichtstrahlen (2, 4) im sichtbaren, vorzugsweise roten Wellenlängenbereich emittieren.

11. Distanzsensor nach einem der Ansprüche 1 - 10, **dadurch gekennzeichnet, dass** dem Empfänger (11) ein optisches Filter (13) und eine Empfangsoptik (12) vorgeordnet sind.

12. Distanzsensor nach einem der Ansprüche 1 - 11, **dadurch gekennzeichnet, dass** die Sendelichtimpulse periodisch mit einer vorgegebenen Pulsfolgefrequenz emittiert werden.

13. Distanzsensor nach einem der Ansprüche 1 - 12, **dadurch gekennzeichnet, dass** mit dem Sendelichtimpulse emittierenden ersten oder zweiten Sender (3, 5) eine Kontrollmessung durchgeführt wird, mit welcher eine Änderung der Objektoberfläche feststellbar ist.

14. Distanzsensor nach einem der Ansprüche 1 - 13, **dadurch gekennzeichnet, dass** die auf den Empfänger (11) auftreffende Empfangslichtmenge, in Abhängigkeit derer die bei Aktivierung eines Senders (3, 5) oder beider Sender (3, 5) erhaltenen Empfangssignale zur Distanzbestimmung herangezogen werden, über einen vorgegebenen Zeitraum erfasst wird.

## Claims

1. Distance sensor with a first transmitter emitting first transmitted light beams and a second transmitter emitting second transmitted light beams, wherein the first and second transmitted light beams extend coaxially and have different beam diameters, with a receiver which is arranged at a spacing to these and constructed as a position-resolving detector and to which the received light beams, which are reflected by an object and extend at an angle of triangulation relative to the transmitted light beams, are guided, and with an evaluating unit in which the distance of the object is ascertained from the position of the light spot of the received light beams on the position-resolving detector, **characterised in that** the first and second transmitters (3, 5) transmit in alternation periodic trains of first and second transmitted light pulses and that in dependence on the amount of received light, which is incident on the receiver (11) during the transmitting operation of the first and/or second transmitter (3, 5) to the receiver (11), the received signals, which are registered during the transmission operation of the first and/or second transmitter (3, 5), at the output of the receiver (1) are utilised for the distance determination.

2. Distance sensor according to claim 1, **characterised in that** the position-resolving detector is formed by a CCD line.

3. Distance sensor according to claim 2, **characterised in that** for ascertaining the distance of an object (8) the centre of area of the light spot of the received light beams (10) on the CCD line is ascertained.

4. Distance sensor according to one of claims 1 to 3, **characterised in that** the transmitted light beams (2, 4) emitted by the transmitters (3, 5) are guided by way of a beam divider mirror (6) to a common transmission optical system (7).

5. Distance sensor according to one of claims 1 to 4, **characterised in that** the first transmitter (3) is formed by a luminescent diode.

6. Distance sensor according to claim 5, **characterised in that** the second transmitter (5) is formed by a laser diode.

7. Distance sensor according to one of claims 5 and 6, **characterised in that** the beam diameter of the first transmitted light beams (2) is greater than the structure widths of structures on the surface of the object (8).

8. Distance sensor according to one of claims 5 to 7, **characterised in that** the beam diameter of the second transmitted light beams (4) lies in the order of magnitude of the structure widths of structures on the surface of the object (8).

9. Distance sensor according to one of claims 1 to 8, **characterised in that** the transmitters (3, 5) emit transmitted light beams (2, 4) of the same wavelength.

10. Distance sensor according to claim 9, **characterised in that** the transmitters (3, 5) emit transmitted light beams (2, 4) in the visible, preferably red, wavelength range.

11. Distance sensor according to one of claims 1 to 10, **characterised in that** an optical filter (13) and a receiving optical system (12) are arranged upstream of the receiver (11).

12. Distance sensor according to one of claims 1 to 11, **characterised in that** the transmitted light pulses are emitted periodically at a predetermined pulse train frequency.

13. Distance sensor according to one of claims 1 to 12, **characterised in that** a checking measurement, by which a change in the object surface can be established, is carried out by the first or second transmitter (3, 5) emitting transmitted light pulses.

14. Distance sensor according to one of claims 1 to 13, **characterised in that** the amount of received light, in dependence on which the received signals obtained on activation of one transmitter (3, 5) or of both transmitters (3, 5) are utilised for distance determination, incident on the receiver (11 ) is detected over a predetermined time period.

## Revendications

1. Capteur de distance avec un premier émetteur de premiers rayons lumineux d'émission et un deuxième émetteur de deuxièmes rayons lumineux d'émission, les premiers et deuxièmes rayons lumineux d'émission étant coaxiaux et présentant des diamètres différents, avec un récepteur implémenté sous la forme d'un détecteur à résolution spatiale, disposé à distance de ceux-ci, sur lequel sont guidés, selon un angle de triangulation avec les rayons lumineux d'émission, les rayons lumineux de réception réfléchis par un objet, et avec une unité d'évaluation dans laquelle est déterminée la distance de l'objet à partir de la position du spot lumineux des rayons lumineux de réception sur le détecteur à résolution spatiale, **caractérisé par le fait que** le premier et le deuxième émetteurs (3, 5) envoient alternativement des suites périodiques de premières et deuxièmes impulsions lumineuses d'émission et que, en fonction de la quantité de lumière de réception arrivant sur le récepteur (11) pendant l'émission du premier et/ou deuxième émetteur (3, 5), on utilise pour déterminer la distance les signaux de réception enregistrés à la sortie du récepteur (11) pendant l'émission du premier et/ou deuxième émetteur (3, 5).

2. Capteur de distance selon la revendication 1, **caractérisé par le fait que** le détecteur à résolution spatiale est formé d'une rangée de CCD.

3. Capteur de distance selon la revendication 2, **caractérisé par le fait que** pour déterminer la distance d'un objet (8), on détermine le centre de gravité de la surface du spot lumineux des rayons lumineux de réception (10) sur la rangée de CCD.

4. Capteur de distance selon l'une des revendications 1 à 3, **caractérisé par le fait que** les rayons lumineux d'émission (2, 4) émis par les émetteurs (3, 5) sont guidés vers une optique d'émission commune (7) au moyen d'un miroir séparateur de faisceau (6).

5. Capteur de distance selon l'une des revendications 1 à 4, **caractérisé par le fait que** le premier émetteur (3) est formé d'une diode électroluminescente.

6. Capteur de distance selon la revendication 5, **caractérisé par le fait que** le deuxième émetteur (5) est formé d'une diode laser.

7. Capteur de distance selon l'une des revendications 5 ou 6, **caractérisé par le fait que** le diamètre de faisceau des premiers rayons lumineux d'émission (2) est supérieur aux largeurs de structure des structures sur la surface de l'objet (8).

8. Capteur de distance selon l'une des revendications 5 à 7, **caractérisé par le fait que** le diamètre de faisceau des deuxièmes rayons lumineux d'émission (4) est de l'ordre de grandeur des largeurs de structure des structures sur la surface de l'objet (8).

9. Capteur de distance selon l'une des revendications 1 à 8, **caractérisé par le fait que** les émetteurs (3, 5) émettent des rayons lumineux d'émission (2, 4) de même longueur d'onde.

10. Capteur de distance selon la revendication 9, **caractérisé par le fait que** les émetteurs (3, 5) émettent des rayons lumineux d'émission (2, 4) dans le domaine spectral visible, de préférence dans le domaine du rouge.

11. Capteur de distance selon l'une des revendications 1 à 10, **caractérisé par le fait qu'**un filtre optique (13) et une optique de réception (12) sont placés devant le récepteur (11).

12. Capteur de distance selon l'une des revendications 1 à 11, **caractérisé par le fait que** les impulsions de lumière d'émission sont émises périodiquement à une fréquence de trains d'impulsions définie.

13. Capteur de distance selon l'une des revendications 1 à 12, **caractérisé par le fait qu'**une mesure de contrôle est effectuée avec le premier ou le deuxième émetteur (3, 5) émettant des impulsions de lumière d'émission, avec laquelle une modification de la surface de l'objet peut être déterminée.

14. Capteur de distance selon l'une des revendications 1 à 13, **caractérisé par le fait que** la quantité de lumière de réception arrivant sur le récepteur (11), en fonction de laquelle les signaux de réception reçus lors de l'activation d'un émetteur (3, 5) ou des deux émetteurs (3, 5) sont utilisés pour déterminer la distance, est mesurée pendant un temps défini.
